# EUROPÄISCHE PATENTSCHRIFT

(11) **EP 3 156 230 B1**
(45) Veröffentlichungstag und Bekanntmachung des Hinweises auf die Patenterteilung: **26.02.2020**
(21) Anmeldenummer: 16165217.7
(22) Anmeldetag: 14.04.2016
(51) Int. Cl.: B32B 37/12, B32B 27/36, B32B 37/20, B32B 37/04

(54) **VERFAHREN UND VORRICHTUNG ZUM HERSTELLEN EINES MEHRLAGIGEN MATERIALS SOWIE EIN DERART HERGESTELLTES MEHRLAGIGES MATERIAL**
METHOD AND APPARATUS FOR MANUFACTURING A MULTILAYER MATERIAL AND A MULTILAYER MATERIAL PRODUCED BY THE PROCESS
PROCEDE ET DISPOSITIF DE PRODUCTION D'UN MATERIAU MULTICOUCHE ET UN MATERIAU MULTICOUCHE AINSI FABRIQUE

(30) Priorität: 15.10.2015 DE 102015220116
(43) Veröffentlichungstag der Anmeldung: 19.04.2017
(73) Patentinhaber: Hofer Textilveredelungs GmbH, 95030 Hof/Saale (DE)
(72) Erfinder: Hertrich, Johannes, 95213 Münchberg (DE); Ocker, Michael, 95367 Trebgast (DE)
(74) Vertreter: Rau, Schneck & Hübner Patentanwälte Rechtsanwälte PartGmbB

(56) Entgegenhaltungen:
- EP-A1- 1 475 425
- WO-A1-2014/019891
- US-A1- 2003 084 994
- US-A1- 2004 121 690

## Beschreibung

Die Erfindung betrifft ein Verfahren zum Herstellen eines mehrlagigen Materials.

Mehrlagige Textilien werden beispielsweise im Automobilbau eingesetzt und mittels Flammkaschierung hergestellt. Kaschierverfahren sind beispielsweise bekannt aus FR 2 405 130 A, DE 20 58 585 A, WO 2014/019891 A1, WO 2014/196845 A1, DE 692 22 472 T2, DE 10 2014 110 252 A1, US 2003/0084994 A1 und EP 1 475 425 A1. Ein Schaummaterial wird oberflächlich angeschmolzen und zwischen zwei Substraten angeordnet und mit diesen verklebt. Ein derart hergestelltes Material weist eine Restschaumdicke von mindestens 0,5 mm auf. Die Restschaumdicke kann auch größer sein und beispielsweise zwischen 3 mm und 8 mm liegen.

Der Erfindung liegt die Aufgabe zugrunde, ein Verfahren zum Herstellen eines mehrlagigen Materials zu vereinfachen.

Die Aufgabe wird durch die Merkmale des Anspruchs 1 gelöst. Der Kern der Erfindung besteht darin, dass ein Klebemedium, das zum Verkleben eines ersten Substrats mit einem zweiten Substrat verwendet wird, während des Zuführens in ein Kaschierwerk und insbesondere während eines Erwärmens mittels einer Wärmequelle von dem ersten Substrat gestützt ist. Das erste Substrat dient als Trägermaterial. Das Klebemedium, das insbesondere mechanisch und/oder thermisch empfindlich ist und infolge der Erwärmung sich zumindest abschnittsweise zersetzen kann, wird mittels des ersten Substrats zuverlässig weitergefördert. Das Klebemedium ist insbesondere ein ungeschäumtes Polymer oder eine Mischung aus mehreren ungeschäumten Polymeren. Dadurch, dass das Klebemedium ungeschäumt ist, kann es mit reduzierter Dicke zur Verfügung gestellt werden. Nach dem Verkleben mit den Substraten weist das mehrlagige Material eine reduzierte Gesamtdicke auf. Eine Restschaumdicke ist entbehrlich. Das ungeschäumte Polymer ist ein thermoplastischer Klebstoff, der insbesondere als bahnförmiges Klebemedium in Rollenform zur Verfügung gestellt werden kann. Das ungeschäumte Polymer ist beispielsweise Polyester, Polyamid oder Polyolefin. Es ist auch denkbar, dass das Klebemedium eine Mischung der genannten Polymere aufweist. Das erste Substrat ist die Oberware des mehrlagigen Materials. Das erste Substrat ist insbesondere eine Dekorlage. Das erste Substrat ist beispielsweise eine Polyester-Webware, Polyester-Wirkware oder Kunstleder in Rollenform. Das zweite Substrat ist eine Unterware wie beispielsweise ein Gestricke und/oder ein Vliesstoff aus Polyester als Funktionsschicht zur Stabilisierung. Zur Herstellung des mehrlagigen Materials wird das Klebemedium gemeinsam mit dem insbesondere bahnförmigen, ersten Substrat einem Kaschierwerk zugeführt. Das Kaschierwerk umfasst eine erste Kalanderwalze und eine zweite Kalanderwalze, die ein erstes Kalanderwalzenpaar bilden. Das erste Substrat dient als Trägermaterial für das Klebemedium. Das Klebemedium und das erste Substrat bilden eine zweilagige Anordnung, die vor dem Erwärmen des Klebemediums unverklebt ist. Das Klebemedium liegt flächig auf dem ersten Substrat auf. Eine freie, dem ersten Substrat abgewandte Oberfläche des Klebemediums wird mittels einer Wärmequelle in Form einer offenen Gasflamme erwärmt. Durch die Erwärmung wird das Klebemedium zumindest bereichsweise zersetzt und geht eine Haftverbindung mit dem ersten Substrat ein. Der Verbund aus Klebemedium und erstem Substrat wird mit einem zweiten Substrat verbunden, indem das zweite Substrat durch den Kalanderwalzenspalt gegen die mit zersetztem Klebemedium versehene Oberfläche des ersten Substrats gepresst wird. Das mehrlagige Material ist sehr dünn, also mit geringer Dicke ausgeführt. Das mehrlagige Material ist eine Sichttextilie, insbesondere für die automobile Innenraumgestaltung, für Heimtextilien und für das Baugewerbe. Das mehrlagige Material kann zur Filtration von Flüssigkeiten eingesetzt werden. Das erfindungsgemäße Verfahren ist besonders wirtschaftlich. Insbesondere ist es ausreichend, eine einzige Wärmequelle zu verwenden. Ein weiterer Vorteil des Verfahrens besteht darin, dass der aparative Aufwand reduziert ist. Gegenüber aus dem Stand der Technik bekannten Flammkaschierverfahren ist eine Wärmequelle ausreichend, um ein erstes Substrat als Oberware und ein zweites Substrat als Unterware mittels eines Klebemediums zu verkleben. Eine zweite Wärmequelle ist entbehrlich. Insbesondere ist eine separate vorgeschaltete Erwärmung des Klebemediums zum Verkleben mit dem ersten Substrat entbehrlich. Das Klebemedium wird mit der Oberware gemeinsam, aber unverklebt, dem Kaschierwerk zugeführt. Dadurch, dass das Klebemedium von dem ersten Substrat als Trägermaterial transportiert wird, kann das Klebemedium mit der Wärmequelle direkt, also unmittelbar mit Wärme beaufschlagt werden. Eine Zerstörung des bahnförmigen Klebemediums, das auf dem Trägermaterial transportiert wird, ist nicht nachteilig und insbesondere erwünscht. Das erwärmte, zumindest abschnittsweise zersetzte Klebemedium dient zum unmittelbar anschließenden Verkleben mit dem zweiten Substrat.

Bei dem Verfahren wird das Klebemedium von der Wärmequelle unmittelbar mit Wärme beaufschlagt und ermöglicht einen verbesserten Wärmeeintrag in das Klebemedium.

Bei einem Verfahren, bei dem das Klebemedium mittels einer offenen Gasflamme direkt beflammt wird, kann eine herkömmliche offene Gasflamme zum Erwärmen des mechanisch und/oder thermisch empfindlichen Klebemediums genutzt werden. Aufgrund der Stützwirkung des ersten Substrats als Trägermaterial ist die direkte Beflammung des Klebewebs möglich.

Bei einem Verfahren gemäß Anspruch 2 kann das Klebemedium besonders wirtschaftlich und unkompliziert, insbesondere in großen Mengen, zur Verfügung gestellt werden. Das Klebemedium kann beispielsweise in Form eines sogenannten Klebewebs vorliegen. Ein Klebeweb ist beispielsweise ein Spinndüsen-Vlies, das als Rolle platzsparend und kompakt gelagert werden kann. Das Klebeweb kann auch in Form einer Netzstruktur vorliegen. Anstelle eines Klebewebs kann als Klebemedium auch ein extrudierter Film in Form einer Folie verwendet werden. Die Folie kann einlagig ausgeführt sein. Die Folie kann auch mehrlagig als Membranfolie ausgeführt sein. Die Abgabe des bahnförmigen Klebemediums von der Rolle kann unkompliziert in einen bestehenden Kaschier-Prozess integriert werden. Von der Rolle kann das bahnförmige Klebemedium automatisiert für das Flammkaschierverfahren zur Verfügung gestellt werden. Bei einem Klebeweb ist der Energieeintrag mittels der Wärmequelle unmittelbar und direkt möglich.

Ein Verfahren gemäß Anspruch 3 gewährleistet, dass die mittels der Wärmequelle zugeführte Energie für das beabsichtigte Verfahren geeignet ist. Die Erwärmungsdauer mittels der Wärmequelle ist ein Maß für die eingebrachte Energie. Es ist gewährleistet, dass ausreichend Energie eingebracht wird, um das Klebemedium auf die erforderliche Erwärmungstemperatur zu erwärmen, und das Klebemedium zuverlässig mit dem Trägermaterial, dem ersten Substrat, zu verbinden. Eine typische Erwärmungsdauer beträgt höchstens 1,5 s und insbesondere höchstens 1,2 s. In Abhängigkeit der eingesetzten Materialien für das erste Substrat, das zweite Substrat und das Klebemedium sowie in Abhängigkeit der Drehgeschwindigkeit der Kalanderwalzen kann die Erwärmungsdauer auch größer als 1,5 s oder kleiner als 1,2 s sein. Insbesondere beträgt die Erwärmungsdauer maximal 1,5 s bei einer Produktionsgeschwindigkeit, also einer durchschnittlichen Drehgeschwindigkeit der Kalanderwalzen, von 40 m/min. Die Produktionsgeschwindigkeit kann beispielsweise zwischen 10 m/min und 50 m/min liegen. Entsprechend größer bzw. kleiner ist die der jeweiligen Produktionsgeschwindigkeit zugeordnete Erwärmungsdauer.

Ein Verfahren gemäß Anspruch 4 gewährleistet eine zerstörungsfreie Erwärmung des Klebemediums. Insbesondere ist verhindert, dass das Klebemedium unkontrolliert zersetzt wird.

Bei einem Verfahren gemäß Anspruch 5 ist gewährleistet, dass eine unbeabsichtigt hohe Erwärmung, die zur Beschädigung und/oder Zerstörung des Klebewebs führen kann, vermieden wird. Die Erwärmungsdauer erfolgt in Abhängigkeit der Oberflächentemperatur und insbesondere für den Fall, dass eine festlegbare Toleranztemperatur erreicht oder überschritten wird.

Mit einem Verfahren gemäß Anspruch 6 kann ein besonders dünnwandiges mehrlagiges Material hergestellt werden. Dadurch, dass das Klebemedium eine Dicke zwischen 0,05 mm bis 0,5 mm und insbesondere zwischen 0,1 mm und 0,3 mm aufweist, beträgt die Gesamtdicke des mehrlagigen Materials im Wesentlichen der Summe der Einzeldicken des ersten Substrats und des zweiten Substrats. Die Dicke des Klebemediums spielt für die Gesamtdicke des mehrlagigen Materials im Wesentlichen keine Rolle.

Ein erfindungsgemäß hergestelltes mehrlagiges Material ist unkompliziert herzustellen und besonders dünnlagig ausgeführt. Auf die Verwendung von Schaummaterial kann verzichtet werden.

Ein Material welches nach dem Verfahren nach Anspruch 8 hergestellt wurde kann besonders vorteilhaft rezykliert werden. Ein derartiges Material ist sortenrein ausgeführt und besteht gemäß Anspruch 10 aus Polyester. Der schichtweise Produktaufbau eines derartigen Materials bleibt gegenüber einem bislang mittels Schaummaterial verklebten mehrlagigen Substrat gleich, wodurch die Austauschbarkeit dieser Materialien verbessert ist. Aufgrund der reduzierten Dicke und des reduzierten Materialeinsatzes ist das mehrlagige Material leichter als ein vergleichbares, gemäß dem Stand der Technik hergestelltes Produkt. Das mehrlagige Material ist ein Leichtbauprodukt.

Ein mehrlagiges Material gemäß Anspruch 9 weist keine Restschaumdicke auf.

Eine Vorrichtung mit einer Wärmequelle und einem Kalanderwalzenpaar ermöglicht die Durchführung des erfindungsgemäßen Herstellverfahrens. Mittels der Wärmequelle, die als offene Gasflamme ausgeführt ist, kann die Oberfläche des Klebemediums erwärmt werden. Mittels des Kalanderwalzenpaares kann die erwärmte Oberfläche mit einem ersten und zweiten Substrat verpresst und somit verbunden werden. Die Wärmequelle ist im Bereich der ersten Kalanderwalze des Kalanderwalzenpaares angeordnet.

Eine Vorrichtung mit einer Spannrolle zum gespannten Zuführen des Klebemediums und/oder des ersten Substrats ermöglicht eine zuverlässige und störungsfreie Zuführung des bahnförmigen Klebemediums und/oder des bahnförmigen ersten Substrats, wobei diese Materialien beim Zuführen insbesondere miteinander unverklebt sind.

Eine Vorrichtung mit einem Kalanderwalzenantrieb für die Kalanderwalzen ermöglicht eine unmittelbare Beeinflussung der Drehzahl des Kalanderwalzenpaares und damit der Fördergeschwindigkeit des Klebemediums im Bereich der offenen Gasflamme. Entsprechend ist die Erwärmungsdauer beeinflussbar.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:

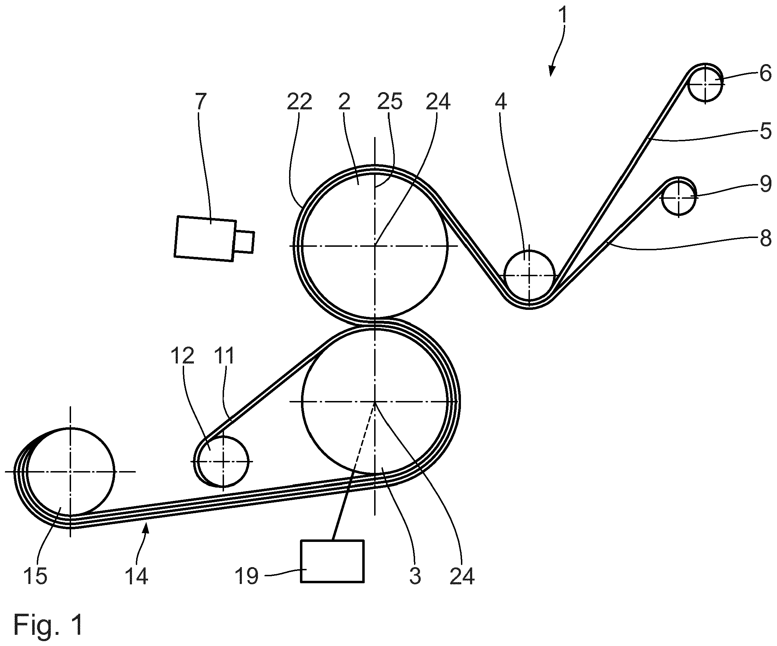

- Fig. 1: eine Vorrichtung zum Herstellen eines mehrlagigen Materials.

Eine in Fig. 1 als Ganzes mit 1 dargestellte Vorrichtung dient zum Herstellen eines mehrlagigen Materials 14. Die Vorrichtung 1 umfasst eine erste Kalanderwalze 2 und eine zweite Kalanderwalze 3. Die erste Kalanderwalze 2 und die zweite Kalanderwalze 3 bilden ein Kalanderwalzenpaar. Die Drehachsen 24 der Kalanderwalzen 2, 3 sind parallel zueinander angeordnet. Die Kalanderwalzen 2, 3 sind im Wesentlichen identisch ausgeführt. Die Drehachse 24 der Kalanderwalzen 2, 3 sind entlang einer Geraden 25 angeordnet. Die Kalanderwalzen 2, 3 sind in einer Richtung entlang der Geraden 25 hintereinander angeordnet.

Die Kalanderwalzen 2, 3 weisen einen Kalanderwalzen-Antrieb 19 und eine nicht näher dargestellte Kraftübertragungseinheit auf. Der Kalanderwalzen-Antrieb 19 dient zum Antreiben beider Kalanderwalzen 2, 3. Als Kraftübertragungseinheit zur Kraftübertragung von dem KalanderwalzenAntrieb 19 auf die Kalanderwalzen 2, 3 kann beispielsweise eine Kettensteuerung dienen. Die Kettensteuerung kann mit einem nicht näher dargestellten Übersetzungsverhältnis ausgeführt sein, so dass die Kalanderwalzen 2, 3 mit unterschiedlichen Drehzahlen, insbesondere mit einem festgelegten Drehzahlverhältnis, drehen.

Ein bahnförmiges Klebemedium 5 ist auf einer Klebemedium-Speicherrolle 6 bevorratet. Gemäß dem gezeigten Ausführungsbeispiel wird als Klebemedium ein dünner thermoplastischer Klebestoff in Form von bahnförmigem Polyester verwendet. Das bahnförmige Polyester weist eine Dicke von 0,2 mm auf.

Ein erstes Substrat 8, das als Oberware dient, liegt bahnförmig vor und ist auf einer ersten Substrat-Speicherrolle 9 bevorratet angeordnet. Das erste Substrat 8 wird der ersten Kalanderwalze 2 zugeführt. Das erste Substrat 8 ist gemäß dem gezeigten Ausführungsbeispiel eine Polyester-Webware.

Bevor das bahnförmige Klebemedium 5 und das erste Substrat 8 der ersten Kalanderwalze 2 zugeführt werden, werden diese um eine Spannrolle 4 herumgeführt. Durch die Spannrolle 4 werden das bahnförmige Klebemedium 5 und das bahnförmige erste Substrat 8 gespannt. Die Zuführung der bahnförmigen Materialien 5, 8 erfolgt kontrolliert und fehlerunanfällig. Vor dem Zuführen des ersten Klebemediums 5 und des ersten Substrats 8, insbesondere zu der ersten Kalanderwalze 2, sind diese Materialien miteinander unverklebt. Das Klebemedium 5 liegt an dem ersten Substrat 8 flächig an. Das erste Substrat 8 dient als Trägermaterial für das dünne Klebemedium 5. Das dünne Klebemedium 5 ist mechanisch und/oder thermisch wenig robust, insbesondere instabil. Das erste Substrat 8 dient als Auflage zur Stabilisierung des Klebemediums 5.

Im Bereich der ersten Kalanderwalze 2 ist eine Wärmequelle 7 vorgesehen. Die Wärmequelle 7 ist ein Gasbrenner, der der ersten Kalanderwalze 2 zugewandt ist. Mittels des Gasbrenners kann eine offene Gasflamme zum Erwärmen des Klebemediums 5 erzeugt werden. Das Klebemedium 5 wird mittels der Wärmequelle 7 unmittelbar erwärmt.

Ein zweites Substrat 11, das insbesondere als Unterware dient, ist an einer zweiten Substrat-Speicherrolle 12 bevorratet angeordnet und kann über eine nicht dargestellte Spannrolle der zweiten Kalanderwalze 3 zugeführt werden. Das zweite Substrat 11 ist gemäß dem gezeigten Ausführungsbeispiel ein Vliesstoff aus Polyester als Funktionsschicht.

Das mehrlagige Material 14 wird auf einer Material-Speicherrolle 15 aufgerollt. Das mehrlagige Material 14, das gemäß dem gezeigten Ausführungsbeispiel hergestellt wird, ist sortenrein und deshalb besonders vorteilhaft rezyklierbar.

Nachfolgend wird die Funktion der Vorrichtung 1 näher erläutert. Das bahnförmige Klebemedium 5 wird von der Klebemedium-Speicherrolle 6 und das erste Substrat 8 wird von der ersten Substrat-Speicherrolle 9 dem Kaschierwerk über die Spannrolle 4 zugeführt. Durch die Spannrolle 4 wird das Klebemedium 5 zuverlässig an das erste Substrat angelegt. Das Klebemedium 5 und das erste Substrat 8 bilden einen zweilagigen, unverklebten Schichtverbund, der der ersten Kalanderwalze 2 zu- und um diese herumgeführt wird. Ein Umschlingungswinkel des zweilagigen Verbunds um die erste Kalanderwalze 2 bezogen auf die Drehachse 24 beträgt etwa 225 °.

Bezogen auf die Gerade 25 ist die Wärmequelle 7 der Klebemedium-Speicherrolle 6 und der ersten Substrat-Speicherrolle 9 gegenüberliegend an der ersten Kalanderwalze 3 angeordnet. Der zweilagige Materialverbund aus Klebemedium 5 und erstem Substrat 8 wird der ersten Kalanderwalze 2 derart zugeführt, dass das erste Substrat 8 unmittelbar an der ersten Kalanderwalze 2 anliegt. Das Klebemedium 5 liegt auf dem ersten Substrat 8 auf. Durch die Erwärmung des Klebemediums 5 mittels der Wärmequelle 7 wird das Klebemedium 5 auf eine Temperatur von mindestens 80°C und beispielsweise auf bis zu 250°C erwärmt. Infolge der Erwärmung findet eine zumindest abschnittsweise Zersetzung des Klebemediums 5 statt. Das Klebemedium 5 verbindet sich mit dem ersten Substrat 8 und mit dem von der zweiten Substrat-Speicherrolle 12 zugeführten zweiten Substrat 11.

Die der ersten Kalanderwalze 2 abgewandte Oberfläche 22 des Klebemediums 5 wird mittels der Wärmequelle 7 erwärmt und anschließend mit dem zweiten Substrat 11 mittels des Kalanderwalzenpaares 2, 3 durch Zusammendrücken miteinander verbunden. Das Kalanderwalzenpaar 2, 3 weist einen Kalanderwalzenspalt auf, der durch die Kalanderwalzen 2, 3 begrenzt ist. Die Spaltbreite des Kalanderwalzenspaltes ist insbesondere kleiner als die Summe der Dicken der Einzelmaterialien, also des ersten Substrats 8, des Klebemediums 5 und des zweiten Substrats 11. Das so hergestellte, dreilagige Material 14 wird auf der Material-Speicherrolle 15 gesammelt. Das dreilagige Material 14 wird um die zweite Kalanderwalze 3 herumgeführt. Das dreilagige Material 14 wird bezogen auf die Gerade 25 gemäß Fig. 1 auf der linken Seite der Kalanderwalze 3 abgeführt. Bezogen auf die Gerade 25 ist die Material-Speicherrolle 15 auf der gleichen Seite angeordnet wie die zweite Substrat-Speicherrolle 12. Insbesondere ist das dreilagige Material 14 um einen unteren Bereich der zweiten Kalanderwalze 3 herumgeführt. Es kann eine zusätzliche, nicht dargestellte Spannrolle vorgesehen sein, um die Zuführung des dreilagigen Materials 14 auf die Material-Speicherrolle 15 durchzuführen.

Eine Reduzierung des Energieeintrags mit der Wärmequelle 7 ist beispielsweise durch eine Reduzierung der ersten Erwärmungsdauer t im Bereich der ersten Kalanderwalze 2 möglich, indem die Kalanderwalze 2 mit höherer Drehgeschwindigkeit angetrieben wird. Es ist aber auch möglich, die Brennerleistung der ersten Wärmequelle 7 zu reduzieren. Weitere Einflussparameter für die Einstellung der Klebeverbindung zwischen dem ersten Substrat 8 und dem zweiten Substrat 11 sind der Anpressdruck im Kalanderwalzenspalt zwischen der ersten Kalanderwalze 2 und der zweiten Kalanderwalze 3, also insbesondere das Verhältnis der Summe der Materialdicken 5, 8, 11 und der Spaltbreite. Ein weiterer Parameter ist die Klebstoffmenge, die zur Klebeverbindung der beiden Substrate 8, 11 verwendet wird.

Ein wesentlicher Vorteil der Erfindung besteht darin, dass die Vorrichtung unaufwendig ausgeführt ist. Insbesondere sind nur zwei Kalanderwalzen erforderlich, um die Verbindung des dreilagigen Materials zu ermöglichen. Insbesondere ist nur eine Wärmequelle erforderlich, um die Erwärmung des Klebemediums derart zu garantieren, dass eine zuverlässige Verklebung mit Obermaterial und Untermaterial möglich ist. Dadurch, dass erkannt worden ist, dass das erste Substrat als Trägermaterial für das Klebemedium verwendet werden kann, wurde das bahnförmige Klebemedium für das konventionelle Kaschierverfahren erschlossen. Aufwendige Kaschierverfahren, die gemäß dem Stand der Technik bislang für die Verwendung von bahnförmigen Klebemedien erforderlich waren, wie beispielsweise die Kalandertechnik, bei der das Klebemedium indirekt, insbesondere über heiße Kalanderwalzen erwärmt wird, und/oder die Flachbetttechnik, bei der das Klebemedium eine Heizzone durchläuft und anschließend in einer Verdichtungszone mit Substrat kompaktiert und verbunden wird, sind für die Verwendung des dünnen, bahnförmigen Klebemediums nicht erforderlich. Die Verwendung bahnförmigen Klebemediums ist unkompliziert und wirtschaftlich möglich.

## Patentansprüche

1. Verfahren zum Herstellen eines mehrlagigen Materials (14) umfassend die Verfahrensschritte
- Zuführen eines Klebemediums (5),
- Zuführen eines ersten Substrats (8),
- Erwärmen des an dem ersten Substrat (8) anliegenden Klebemediums (5) mittels einer Wärmequelle (7),
- Zuführen eines zweiten Substrats (11),
- Verbinden des erwärmten Klebemediums (5) mit dem ersten Substrat (8) und mit dem zweiten Substrat (11),
- wobei das erste Substrat (8) als Trägermaterial das unverklebte Klebemedium (5) transportiert,
**dadurch gekennzeichnet, dass**
- das unverklebte Klebemedium (5) von der Wärmequelle (7) unmittelbar mit Wärme beaufschlagt wird,
- das unverklebte Klebemedium (5) mittels einer offenen Gasflamme direkt beflammt wird.

2. Verfahren gemäß Anspruch 1, **dadurch gekennzeichnet, dass** das Klebemedium (5) als Klebeweb oder Folie bereitgestellt wird.

3. Verfahren gemäß einem der vorstehenden Ansprüche, **dadurch gekennzeichnet, dass** eine Erwärmungsdauer (t) mittels der Wärmequelle (7) höchstens 1,5 s beträgt.

4. Verfahren gemäß einem der vorstehenden Ansprüche, **dadurch gekennzeichnet, dass** während des Erwärmens eine Oberflächentemperatur der Oberfläche (22) des Klebemediums (5) zwischen 80°C und 250°C beträgt.

5. Verfahren gemäß Anspruch 3 oder 4, **gekennzeichnet durch** Beeinflussen der Erwärmungsdauer (t) in Abhängigkeit der Oberflächentemperatur.

6. Verfahren gemäß einem der vorstehenden Ansprüche, **dadurch gekennzeichnet, dass** das Klebemedium (5) eine Dicke von 0,05 mm bis 0,5 mm, insbesondere von 0,1 mm bis 0,3 mm, beträgt.

7. Verfahren gemäß einem der vorstehenden Ansprüche, **dadurch gekennzeichnet, dass** die Flammtemperatur mehr als 1.000 °C beträgt.

8. Verfahren gemäß einem der vorstehenden Ansprüche, **dadurch gekennzeichnet, dass** das hergestellte mehrlagige Material (14) sortenrein ausgeführt ist.

9. Verfahren gemäß einem der vorstehenden Ansprüche, **dadurch gekennzeichnet, dass** das hergestellte mehrlagige Material (14) schaumfrei ausgeführt ist.

10. Verfahren gemäß einem der vorstehenden Ansprüche, **dadurch gekennzeichnet, dass** das erste Substrat (8) eine Oberware des mehrlagigen Materials (14) ist.

11. Verfahren gemäß einem der vorstehenden Ansprüche, **dadurch gekennzeichnet, dass** das zweite Substrat (11) eine Unterware des mehrlagigen Materials (14) ist.

12. Verfahren gemäß einem der vorstehenden Ansprüche, **dadurch gekennzeichnet, dass** das zwischen dem ersten Substrat (8) und dem zweiten Substrat (11) angeordnete und mit den Substraten (8, 11) verklebte Klebemedium (5) des hergestellten mehrlagigen Materials (14) ein ungeschäumtes Polymer oder eine Mischung aus ungeschäumten Polymeren ist.

13. Verfahren gemäß einem der vorstehenden Ansprüche, **dadurch gekennzeichnet, dass** das hergestellte mehrlagige Material (14) aus Polyester besteht.

## Claims

1. Method for producing a multi-layered material (14), comprising the method steps of:
- feeding an adhesive medium (5),
- feeding a first substrate (8),
- heating by means of a heat source (7) the adhesive medium (5) bearing against the first substrate (8),
- feeding a second substrate (11),
- joining the heated adhesive medium (5) to the first substrate (8) and to the second substrate (11),
- wherein the first substrate (8), as a carrier material, transports the unbonded adhesive medium (5),
**characterized in that**
- heat is supplied directly to the unbonded adhesive medium (5) from the heat source (7),
- the unbonded adhesive medium (5) is directly flamed by means of an open gas flame.

2. Method according to Claim 1, **characterized in that** the adhesive medium (5) is provided as an adhesive web or as a film.

3. Method according to either of the preceding claims, **characterized in that** a duration of heating (t) by means of the heat source (7) is at most 1.5 s.

4. Method according to one of the preceding claims, **characterized in that**, during the heating, a surface temperature of the surface (22) of the adhesive medium (5) is between 80°C and 250°C.

5. Method according to Claim 3 or 4, **characterized by** influencing of the duration of heating (t) in a manner dependent on the surface temperature.

6. Method according to one of the preceding claims, **characterized in that** the adhesive medium (5) is a thickness of 0.05 mm to 0.5 mm, in particular of 0.1 mm to 0.3 mm.

7. Method according to one of the preceding claims, **characterized in that** the flame temperature is higher than 1000°C.

8. Method according to one of the preceding claims, **characterized in that** the multi-layered material (14) produced is formed of a single kind.

9. Method according to one of the preceding claims, **characterized in that** the multi-layered material (14) produced is formed to be foam-free.

10. Method according to one of the preceding claims, **characterized in that** the first substrate (8) is a top material of the multi-layered material (14).

11. Method according to one of the preceding claims, **characterized in that** the second substrate (11) is a bottom material of the multi-layered material (14).

12. Method according to one of the preceding claims, **characterized in that** the adhesive medium (5) of the multi-layered material (14) produced, which is arranged between the first substrate (8) and the second substrate (11) and is bonded to the substrates (8, 11), is a non-foamed polymer or a mixture of non-foamed polymers.

13. Method according to one of the preceding claims, **characterized in that** the multi-layered material (14) produced consists of polyester.

## Revendications

1. Procédé de production d'un matériau multicouche (14) comprenant les étapes
- d'alimentation d'un support adhésif (5),
- d'alimentation d'un premier substrat (8),
- de chauffage du support adhésif (5) appliqué sur le premier substrat (8) au moyen d'une source de chaleur (7),
- d'alimentation d'un second substrat (11),
- de liaison du support adhésif (5) chauffé au premier substrat (8) et au second substrat (11),
- dans lequel le premier substrat (8) en tant que matériau support transporte le support adhésif (5) non collé,
**caractérisé en ce que**
- le support adhésif (5) non collé est directement exposé à la chaleur de la source de chaleur (7),
- le support adhésif (5) non collé est directement enflammé au moyen d'une flamme ouverte.

2. Procédé selon la revendication 1, **caractérisé en ce que** le support adhésif (5) se présente sous la forme d'une cire adhésive ou d'un film adhésif.

3. Procédé selon l'une des revendications précédentes, **caractérisé en ce qu'**un temps de chauffage (t) au moyen de la source de chaleur (7) est d'au plus 1,5 s.

4. Procédé selon l'une des revendications précédentes, **caractérisé en ce qu'**une température de surface de la surface (22) du support adhésif (5) est comprise entre 80 et 250 °C lors du chauffage.

5. Procédé selon la revendication 3 ou 4, **caractérisé par** l'influence sur la durée de chauffage (t) en fonction de la température de surface.

6. Procédé selon l'une des revendications précédentes, **caractérisé en ce que** le support adhésif (5) a une épaisseur de 0,05 mm à 0,5 mm, en particulier de 0,1 mm à 0,3 mm.

7. Procédé selon l'une des revendications précédentes, **caractérisé en ce que** la température de flamme est supérieure à 1 000 °C.

8. Procédé selon l'une des revendications précédentes, **caractérisé en ce que** le matériau multicouche (14) produit présente une pureté variétale.

9. Procédé selon l'une des revendications précédentes, **caractérisé en ce que** le matériau multicouche (14) produit est exempt de mousse.

10. Procédé selon l'une des revendications précédentes, **caractérisé en ce que** le premier substrat (8) est un tissu supérieur du matériau multicouche (14).

11. Procédé selon l'une des revendications précédentes, **caractérisé en ce que** le second substrat (11) est un tissu inférieur du matériau multicouche (14).

12. Procédé selon l'une des revendications précédentes, **caractérisé en ce que** le support adhésif (5) du matériau multicouche (14) produit, qui est disposé entre le premier substrat (8) et le second substrat (11) et qui est collé aux substrats (8, 11), est un polymère non moussé ou un mélange de polymères non moussés.

13. Procédé selon l'une des revendications précédentes, **caractérisé en ce que** le matériau multicouche (14) produit est constitué de polyester.
